(19) Europäisches Patentamt
European Patent Office
Office européen des brevets

(11) Publication number: 0 232 815 A1

# (12) EUROPEAN PATENT APPLICATION

(21) Application number: 87101307.4

(22) Date of filing: 30.01.87

(51) Int. Cl.⁴: C 03 B 37/018

(30) Priority: 30.01.86 JP 16956/86

(43) Date of publication of application: 19.08.87 Bulletin 87/34

(84) Designated Contracting States: DE FR GB IT NL

(71) Applicant: SUMITOMO ELECTRIC INDUSTRIES LIMITED, No. 15, Kitahama 5-chome Higashi-ku, Osaka-shi Osaka 541 (JP)

(72) Inventor: Kyogoku, Takeshi c/o Yokohama Works, Sumitomo Electric Ind.Ltd. 1, Taya-cho Totsuka-ku, Yokohama-shi Kanagawa (JP)
Inventor: Saito,Tatsuo,c/o Yokohama Works, Sumitomo Electric Ind.Ltd. 1, Taya-cho Totsuka-ku, Yokohama-shi Kanagawa (JP)
Inventor: Kuwahara, Toru c/o Yokohama Works, Sumitomo Electric Ind.Ltd. 1, Taya-cho Totsuka-ku, Yokohama-shi Kanagawa (JP)

(74) Representative: Hansen, Bernd, Dr.rer.nat. et al, Hoffmann, Eitle & Partner Patentanwälte Arabellastrasse 4, D-8000 München 81 (DE)

## (54) Method and apparatus for producing glass preform for optical fiber.

(57) A glass preform for use in the fabrication of an optical fiber having less hydroxyl groups is produced with good reproducibility by a method comprising steps of synthesizing glass soot particles from a glass-forming raw material, depositing the glass soot particles on a rotating starting member to form a porous glass preform, heating the porous preform under pressure in a specific range at a temperature at which hydroxyl groups are removed from the preform and the preform is vitrified to produce a transparent glass preform. A new apparatus for vitrifying a porous soot preform is also disclosed.

EP 0 232 815 A1

## TITLE OF THE INVENTION

METHOD AND APPARATUS FOR PRODUCING GLASS PREFORM FOR OPTICAL FIBER

## BACKGROUND OF THE INVENTION

### Field of the Invention

The present invention related to a method and apparatus for producing a glass preform for use in the fabrication of an optical fiber.

### Description of the Prior Arts

Known methods for producing a glass preform for use in the fabrication of an optical fiber include the inside CVD method, the outside CVD method and the axial deposition method.

As disclosed in Japanese Patent Publication No. 23185/1976, the inside CVD method comprises introducing a glass-forming raw material in a quartz or glass tube which is heated from outside to convert the raw material into glass soot particles, depositing the soot particles on an inner surface of the quartz tube to form a porous preform, and heating and melting the quartz tube having the deposited porous preform to solidify (or collapse) it to obtain a transparent glass preform.

The outside CVD method comprises flame hydrolyzing the glass-forming raw material in an oxyhydrogen flame to form glass soot particles, depositing the soot particles on a rotating starting member to form a porous preform and

heating and vitrify it to obtain a transparent glass preform.

The axial deposition method comprises flame hydrolyzing the glass-forming raw material in an oxyhydrogen flame to form glass soot particles, depositing the soot particles on a rotating starting member to form a porous preform and further heating and melting it by a heater to obtain a transparent glass preform.

Among the above described conventional methods for producing the glass preform, the inside CVD method can prevent contamination of the glass preform by impurities since chemical reactions take place in a closed atmosphere in the quartz tube. Further, since hydrogen is not directly involved in the reactions during the formation of the glass preform, possibility of formation of hydroxy groups is greatly decreased. Therefore, the optical fiber fabricated from the glass preform produced by the inside CVD method has very low attenuation of light transmission. However, according to this method, the deposited glass soot preform may contain the hydroxyl groups which originate from water contained in the glass-forming raw material, hydrides (e.g., $SiCl_3H$, $SiCl_2H_2$, $SiClH_3$ and the like) and/or water absorbed on the inner surface of the quartz or glass tube. To reduce the content of the hydroxyl groups in the soot preform produced by this method, the following technique has been proposed:

Prior to the chemical vapor deposition reactions in the quartz tube, the following reactions are effected in a preheating zone:

$$SiCl_4 + 2H_2O \rightarrow SiO_2 + 4HCl$$

$$SiHCl_3 + O_2 \rightarrow SiO_2 + HCl + Cl_2$$

Thereby, water and the hydride are converted into $SiO_2$, hydrochloride and chlorine and formation of the hydroxyl groups in the soot preform is prevented (cf. Japanese Patent Kokai Publication (unexamined) No. 143842/1977).

The outside CVD method cannot prevent the formation of the hydroxyl groups in the soot preform, since the reactions for forming the porous soot preform are not carried out in a closed tube. Further, since the gas included in the soot preform is not completely eliminated during the heating step in which the soot preform is vitrified, a part of the gas remains in the soot preform and may adversely affects the light transmission characteristics of the optical fiber fabricated from the glass preform produced by this method. To overcome the defects of the outside CVD method, Japanese Patent Kokai Publication (unexamined) No. 9514/1974 proposes supply of CO gas instead of hydrogen gas as a combustion gas in the oxyhydrogen burner. Japanese Patent Kokai Publication (unexamined) No. 18909/1974 proposes heating of the porous preform in vacuum. Japanese Patent Kokai Publication (unexamined) No. 149356/1975 proposes heating of the porous preform in a halogen-containing atmosphere. To

remove the gas remained in the porous soot preform, Japanese Patent Kokai Publication (unexamined) No. 9523/1974 proposes gradual insertion of the porous soot preform in an inert gas atmosphere at a low rate sufficient for the gas to escape from the unvitrified part of the preform.

Since the axial deposition method utilized hydrogen gas as a combustion gas in the oxyhydrogen flame and the soot particles are exposed to air containing moisture, a plenty amount of the hydroxyl groups are formed in the porous soot preform, which adversely affects the light transmitting characteristics of the optical fiber fabricated from such preform. To overcome the defects of the axial deposition method, Japanese Patent Kokai Publication (unexamined) No. 127194/1979 proposed the use of a halogen-containing compound (e.g., $SiCl_4$, $GeCl_4$, $BCl_3$ and the like) as the glass-forming raw material. Japanese Patent Kokai Publication (unexamined) No. 94050/1979 proposed a method for heating the porous preform as shown in Fig. 1, in which the porous soot preform 1 is heated in a reactor 2 by an outside heating furnace 5 with flowing dehydration gas such as chlorine and helium from an inlet tube 3 to an exhaust tube 4.

The above described conventional methods, however, cannot completely prevent inclusion of the hydroxyl groups and/or impurities in the transparent glass preform and, in turn, in the optical fiber fabricated from said glass preform.

As disclosed in Japanese Patent Kokai Publication (unexamined) No. 94050/1979, when the porous soot preform 1 is heated in the reactor 2 through which the dehydration gas is flown, impurities, particularly metal such as copper and iron liberate from a surface of the reactor material and contaminate the preform. Further, since air tightness of the container 2 is not sufficient, water in the air is introduced in the container and may be contained in the preform 1. Due to high temperature in the heating step, the reactor is deformed and its life time is shortened. In addition, it is necessary to take care of leakage of the gas from the reactor in view of working atmosphere, safety and environmental health.

## SUMMARY OF THE INVENTION

One object of the present invention is to provide a method for producing a glass preform for use in the fabrication of an optical fiber with good reproducibility.

Another object of the present invention is to provide a method for producing a glass preform for use in the fabrication of an optical fiber, which can prevent deformation of the reactor in which a soot preform is heated and vitrified to obtain a transparent glass preform.

Further object of the present invention is to provide an apparatus suitable for carrying out the method of the present invention.

## BRIEF DESCRIPTION OF THE DRAWINGS

Fig. 1 schematically shows a conventional apparatus used for heating a porous soot preform,

Figs. 2 and 3 schematically show two embodiments of the apparatus for heating a porous soot preform according to the present invention, and

Figs. 4A and 4B show quartz reactors which was slightly deformed due to pressure difference between the inside and outside of the reactor.

## DETAILED DESCRIPTION OF THE INVENTION

According to one aspect of the present invention, there is provided a method for producing a glass preform for use in the fabrication of an optical fiber, which comprises steps of synthesizing glass soot particles from a glass-forming raw material, depositing the glass soot particles on a rotating starting member to form a porous glass preform, heating the porous preform under pressure in a specific range at a temperature at which hydroxyl groups are removed from the preform and the preform is vitrified to produce a transparent glass preform.

According to another aspect of the present invention, there is provided an apparatus for vitrifying a porous soot preform to produce a transparent glass preform for use in the fabrication of an optical fiber, which apparatus comprises a reactor into which the porous soot preform is inserted, a heater having an opening through which the reactor is inserted in the heater and heated to a temperature at

which hydroxyl groups are removed from the preform and the preform is vitrified at a higher temperature, a pressure sensor which detects inner pressure of the reactor, and a gas pressure controller which compares the inner pressure of the reactor detected by said sensor and a predetermined pressure and regulates a valve for introducing gas into the reactor and/or a valve for exhausting the gas from the reactor according to the difference between the inner pressure and the predetermined pressure so as to keep the inner pressure constant.

The glass soot particles are synthesized according to a per se conventional method, for example, flame hydrolysis of the glass-forming raw material (e.g., $SiCl_4$, $GeCl_4$, $BCl_3$, etc.).

Preferably, the dehydration and vitrification of the porous soot preform is carried out in a pressure range of -2 to 5 mmaq., more preferably -0.5 to 1 mmaq. at a temperature of 900 to 1,070°C, preferably 900 to 1,650°C.

The gas to be used in the dehydration and vitrification step is a mixture of chlorine and helium. A volume ratio of chlorine to helium is usually from 3:100 to 30:100, preferably from 3.5:100 to 20:100.

The flow rate of the gas mixture introduced in the reactor is adjusted so that the inner pressure of the container is kept in the above specified range.

Preferred embodiments of the present invention

will be explained with making reference to the accompanying drawings by way of example.

Example 1

An apparatus schematically shown in Fig. 2 was used for dehydrating and vitrifying a porous soot preform, in which 1 stands for a porous soot preform to be dehydrated and vitrified, 2a stands for a reactor made of pure quartz, 3 is a gas inlet tube for introducing chlorine and helium gas into the reactor, 4 stands for an exhaust tube, 4a is a valve for controlling the exhausting rate of the gas, 5 is a heater for heating the preform in the reactor, 7 stands for a pressure gauge as the pressure sensor, 8 stands for a regulator which compares the pressure detected by the gauge 7 and a pressure determined by a pressure fixing means 9 and controlling the valve 4a according to a pressure difference so as to adjust the exhausting rate of the gas, and 10 stands for a rotating starting rod.

In this example, a porous preform produced by the VAD was heated under inner pressure of the reactor in the range of -0.5 to 0 mmaq. at a temperature between 900 and 1,650°C with supplying chlorine at arate of 500 ml/min. and helium at a rate of 10,000 ml/min. The preform was heated and dehydrated for 8 hours to obtain a transparent glass preform. Under these conditions, the quartz reactor could be used for three months without any trouble but it was slightly dented as shown in Fig. 4A.

From the transparent preform, an optical fiber was fabricated. Its excess loss of light transmission due to absorption by the hydroxyl groups was lower than 1 dB/km at a wavelength of 1.39 μm. This result means that there occurred neither leakage of chlorine from the reactor nor any introduction of the air into the reactor.

Example 2

An apparatus shown in Fig. 3 was used. This apparatus was substantially the same as that of Fig. 2 except that it had a valve 3a for adjusting the flow rate of of chlorine and helium to be introduced in the reactor.

In this example, a porous preform produced by the VAD method was heated under inner pressure of the reactor in the range of 0 to 1 mmaq. at a temperature between 900 and 1,650°C with supplying the mixture of chlorine and helium of a volume ratio of 15:100 at a rate of 11,500 ml/min at the dehydration stage, and helium only at a rate of 10 l/min. at the vitrifying stage. The preform was heated and dehydrated for 8 hours to obtain a transparent glass preform. Under these conditions, the quartz reactor could be used for two months and a half without any trouble but it was slightly inflated as shown in Fig. 4B.

Although the reactor used in Examples 1 and 2 is made of pure quartz, it may be made of other material.

The quartz made reactor is preferred since it has better air tightness so that it achieves better dehydration and transparency of the glass preform. However, when difference between the inner pressure and atmospheric pressure becomes too large, it tends to be deformed as shown in Figs. 4 A and 4B, the pressure difference should be kept within a certain range.

In Examples 1 and 2, the porous soot preform was produced outside the reactor by the conventional method and heated in the reactor to dehydrate and vitrified it. The dehydration and vitrification may be carried out in the same apparatus in which the porous soot preform is produced by flame hydrolysis, for example, according to the VAD method.

CLAIMS:

1. A method for producing a glass preform for use in the fabrication of an optical fiber, which comprises steps of synthesizing glass soot particles from a glass-forming raw material, depositing the glass soot particles on a rotating starting member to form a porous glass preform, heating the porous preform in a reactor containing chlorine and helium under pressure in a specific range at a temperature at which hydroxyl groups are removed from the preform and the preform is vitrified to produce a transparent glass preform.

2. The method according to claim 1 wherein the pressure in the heating step is controlled by adjusting a rate of chlorine and helium to be introduced in the reactor.

3. The method according to claim 1, wherein the pressure in the heating step is controlled by adjusting a rate of chlorine and helium to be exhausted from the reactor.

4. The method according to claim 1, wherein the reactor is made of pure quartz.

5. The method according to claim 1, the pressure in the heating step is from -2 to 5 mmaq.

6. An apparatus for vitrifying a porous soot preform to produce a transparent glass preform for use in the fabrication of an optical fiber, which apparatus comprises a reactor into which the porous soot preform is inserted, a

heater having an opening through which the reactor is inserted in the heater and heated to a temperature at which hydroxyl groups are removed from the preform and the preform is vitrified, a pressure sensor which detects inner pressure of the reactor, and a gas pressure controller which compares the inner pressure of the reactor detected by said sensor and a predetermined pressure and regulates a valve for introducing gas into the reactor and/or a valve for exhausting the gas from the reactor according to the difference between the inner pressure and the predetermined pressure so as to keep the inner pressure constant.

7. The apparatus according to claim 6, wherein the reactor is made of pure quartz.

*Fig. 1 Prior Art*

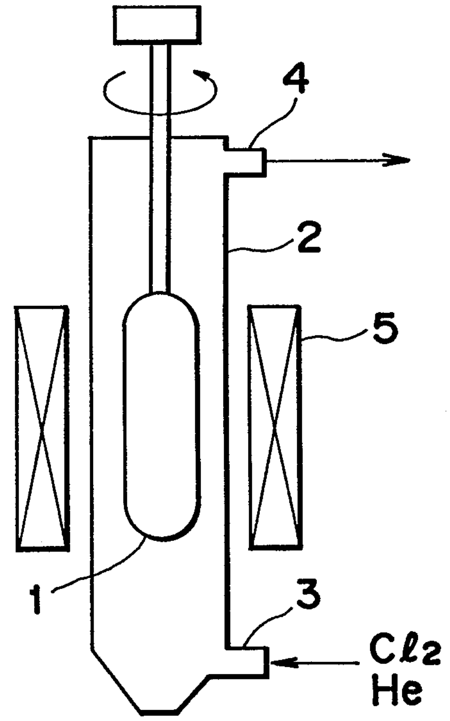


*Fig. 2*

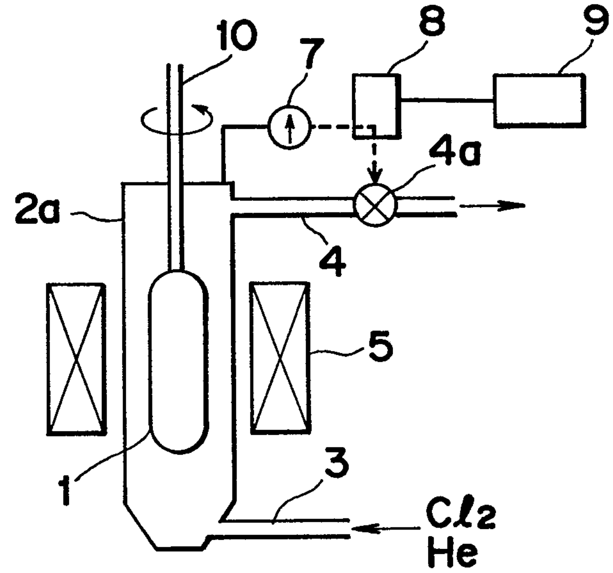

Fig. 3

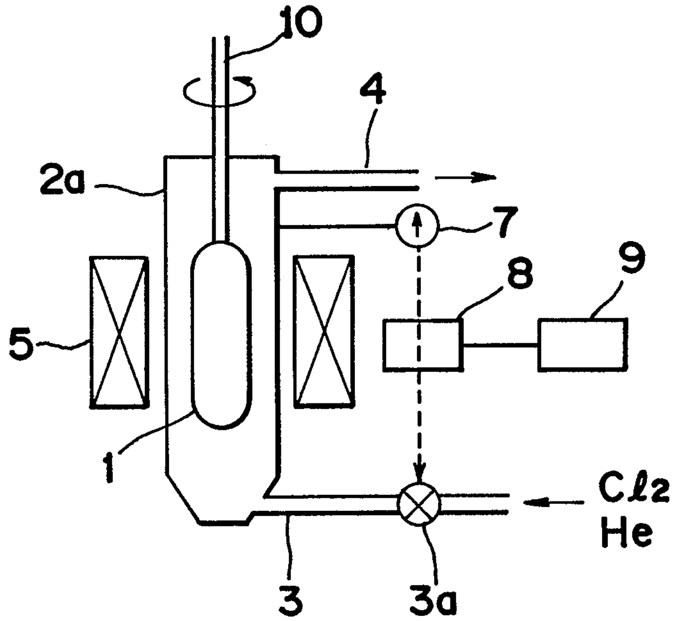


Fig. 4A

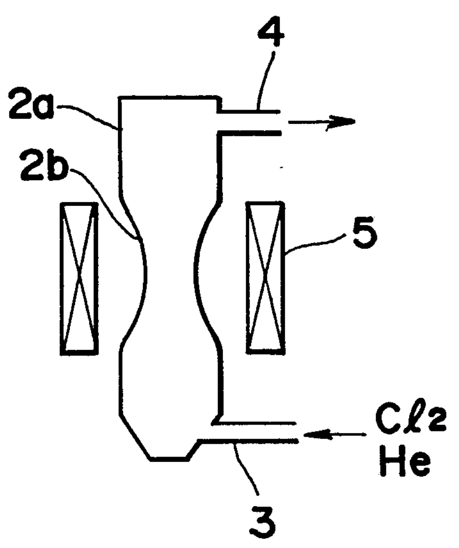


Fig. 4B

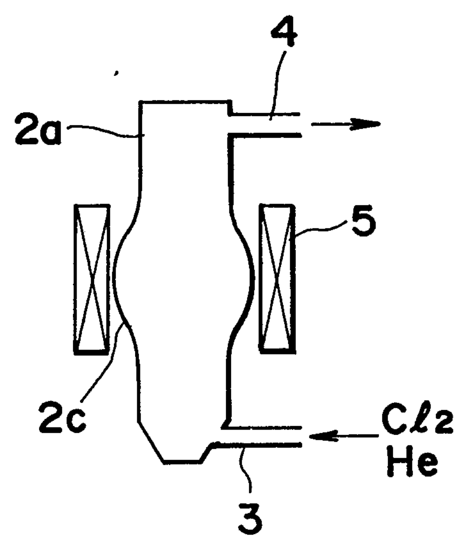

European Patent Office

# EUROPEAN SEARCH REPORT

Application number

EP 87101307.4

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | PATENT ABSTRACTS OF JAPAN, unexamined applications, C field, vol. 9, no. 205, August 22, 1985 THE PATENT OFFICE JAPANESE GOVERNMENT page 36 C 299 * Kokai-no 60-71 536 (NIPPON DENSHIN DENWA KOSHA) * -- | 1,4,6,7 | C 03 B 37/018 |
| A | EP - A1 - 0 082 305 (LICENTIA PATENT-VERWALTUNGS-GMBH) * Claims 1,2,4,6,7 * -- | 1,6 | |
| D,A | PATENT ABSTRACTS OF JAPAN, unexamined applications, E section, vol 3, no. 117, September 29, 1979 THE PATENT OFFICE JAPANESE GOVERNMENT page 10 E 141 * Kokai-no. 54-94 050 (NIPPON DENSHIN DENWA KOSHA) * -- | 1,6 | **TECHNICAL FIELDS SEARCHED (Int Cl 4)** |
| P,A | US - A - 4 600 442 (PASTOR et al.) * Claims 1-3,5,7; fig. * ---- | 1,6 | C 03 B<br>G 02 B<br>C 03 C |

The present search report has been drawn up for all claims

| Place of search | Date of completion of the search | Examiner |
|---|---|---|
| VIENNA | 05-05-1987 | HAUSWIRTH |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document